# EUROPÄISCHE PATENTSCHRIFT

(11) **EP 0 316 458 B1**
(45) Veröffentlichungstag und Bekanntmachung des Hinweises auf die Patenterteilung: **04.08.1993**
(21) Anmeldenummer: 87115120.5
(22) Anmeldetag: 16.10.1987
(51) Int. Cl.: H04L 7/033

(54) **Digitaler Chip mit Eingangsdaten-Synchronisierung**
Digital chip with synchronisation of input data
Circuit intégré numérique avec synchronisation des données d'entrée

(43) Veröffentlichungstag der Anmeldung: 24.05.1989
(73) Patentinhaber: Deutsche ITT Industries GmbH, 79108 Freiburg (DE)
(72) Erfinder: Orben, Hans-Joseph, Dipl.-Ing., D-7803 Heuweiler (DE); Hoos, Martin, Dipl.-Ing., D-7801 Vörstetten (DE)

(56) Entgegenhaltungen:
- US-A- 4 280 099
- ELECTRICAL DESIGN NEWS, Band 17, Nr. 6, 15. März 1972, Seiten 36-39, Cahners Publishing Co., Denver, US; D.A. JOHNSON: "Low-power digital phase locked loop utilizes CMOS logic"
- IBM TECHNICAL DISCLOSURE BULLETIN, Band 26, Nr. 3B, August 1983, Seiten 1384-1386, New York, US; G.P. OLSON et al.: "Clock extraction for multiphase clock circuits comprising a C-FET MOS latch design"

## Beschreibung

Die in den Ansprüchen gekennzeichnete Erfindung betrifft digitale Chips mit Eingangsdaten-Synchronisierung. In der Digitaltechnik werden Chips mit den unterschiedlichsten Funktionen verwendet. Es ist auch möglich, daß mehrere Chips zusammenarbeiten, wie dies beispielsweise bei den in einem digitalen Fernsehempfänger verwendeten Chips der Fall ist.

Derartige Chips haben mindestens einen Eingangsbus, der eine beliebige Anzahl von m Datenleitungen für mit einem Eingangsdatentakt getaktete Eingangsdaten enthält. Die Eingangsdaten werden üblicherweise innerhalb des Chips zunächst mit dem dessen Signalverarbeitung zugrundeliegenden Innentaktsignal synchronisiert, das dieselbe Frequenz wie der Eingangsdatentakt hat, bevor die Eingangsdaten innerhalb des Chips weiterverarbeitet werden.

In manchen Anwendungsfällen, wie sie beispielsweise auch in digitalen Fernsehempfängern auftreten, wenn z.B. eine Dateninterpolation vorgenommen wird oder wenn Daten aus einem Speicher schneller aus- als eingelesen werden, ist dem Chip auch ein Taktsignal zuzuführen, dessen Frequenz im allgemeinen ein ganzzahliges Vielfaches der Frequenz des Eingangsdatentaktes ist. Da zur Synchronisierung üblicherweise auch ein Taktsignal mit der Frequenz des Eingangsdatentakts zuzuführen ist, das von einem außerhalb des Chips vorgesehenen Taktoszillator erzeugt oder wie in der US-A-4,280,099 von den Eingangsdaten aus einem Taktsignal mit einem ganzzahligen Vielfachen des Eingangsdatentaktes durch einstellbare Frequenzteiler abgeleitet wird, benötigt ein derartiger Chip jeweils einen Anschluß für die beiden Taktsignale. Da aber die Anzahl der zur Verfügung stehenden Chipanschlüsse oft kleiner ist als die von den verschiedenen Chipfunktionen geforderte Anzahl, stehen meist die beiden erforderlichen Taktsignalanschlüsse nicht zur Verfügung.

Die Erfindung weist einen Weg, wie mit nur einem einzigen Anschluß die Eingangsdaten auf den Eingangsdatentakt synchronisiert werden können.

Die Erfindung wird nun anhand der Figuren der Zeichnung näher erläutert.
Fig. 1 zeigt in Form eines stark schematisierten Blockschaltbilds ein Ausführungsbeispiel der Erfindung,
Fig. 2 zeigt in Form eines logischen Schaltbilds den Aufbau der bei der Erfindung erforderlichen Meßschaltung sowie eine Weiterbildung davon, und
Fig. 3 zeigt eine zur Funktionserläuterung der Erfindung dienende Kurvenschar.

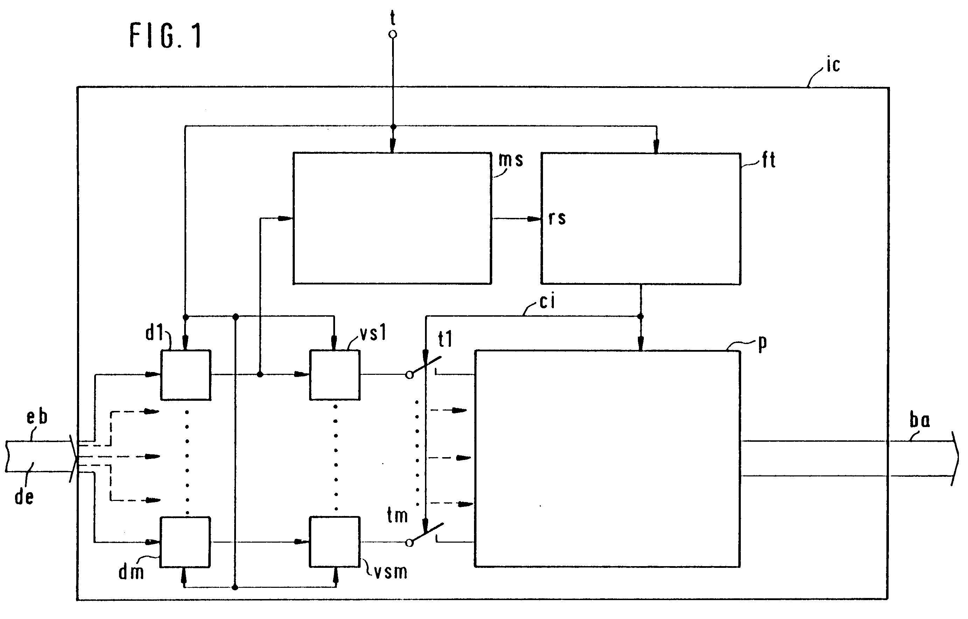

Das stark schematisierte Blockschaltbild der Fig. 1 zeigt den Chip ic dem über den Eingangsbus eb mit m Datenleitungen die Eingangsdaten de zugeführt sind. Diese sind mit dem Eingangsdatentakt getaktet, was bedeutet, daß die Datenwechselzeitpunkte in dessen Takt auftreten. Von den weiteren äußeren Anschlüssen des Chips ic ist lediglich der für das Taktsignal t gezeigt, dessen Frequenz fi ein ganzzahliges Vielfaches n der Frequenz fe des Eingangsdatentakts ist.

Innerhalb des Chips ist der rücksetzbare 1/n-Frequenzteiler ft für das Taktsignal t vorgesehen, dessen Ausgangssignal ci ein Rechtecksignal mit dem Impulspausenverhältnis 1:(n-1) ist. Die Frequenz fi des Taktsignals wird also auf die Frequenz fe des Eingangsdatentakts de herabgesetzt.

Jeder der m Datenleitungen des Eingangsbus ist innerhalb des Chips ic einer der Datensynchronisierer d1..dm zugeordnet, denen das Taktsignal t als synchronisierendes Signal zugeführt ist.

Ferner ist die Meßschaltung ms für die Phase des Taktsignals t bezüglich des Eingangsdatentakts vorgesehen, der das Ausgangssignal des ersten Datensynchronisierers d1 und das Taktsignal t zugeführt ist. Ihr dem Reset-Eingang rs des Frequenzteilers ft zugeführtes Ausgangssignal bewirkt, daß die Impulse von dessen Ausgangssignal möglichst zentriert zwischen zwei aufeinanderfolgenden Datenwechselzeitpunkten der Eingangsdaten de liegen.

Jedem der Datensynchronisierer d1...dm ist eine der z.B vom Taktsignal t getakteten Verzögerungsstufen vs..vsm nachgeschaltet, deren Verzögerungszeit mindestens gleich der von der Meßschaltung ms für einen einzelnen Phasenvergleich benötigten Zeit ist. Auf jeden Verzögerer vs.. folgt einer der Transferschalter t1, tm, deren Steuereingang von Ausgangssignal ci des 1/n-Frequenzteilers ft angesteuert ist.

In Fig. 1 ist angedeutet, daß die Ausgangssignale der Transferschaltung t1..tm zur weiteren Datenverarbeitung der Stufe p zugeführt werden können, deren Ausgangsdaten zum Ausgangsbus ba gelangen. Der Stufe p kann dabei zu ihrer Taktung das Ausgangssignal ci des 1/n-Frequenzteilers ft wie gezeigt zugeführt sein. Es ist jedoch auch möglich, wie es eingangs schon erwähnt wurde, das Taktsignal t der Stufe p zuzuführen. Die Ausgestaltung der Stufe p und deren Taktung liegt jedenfalls im Belieben des Fachmanns.

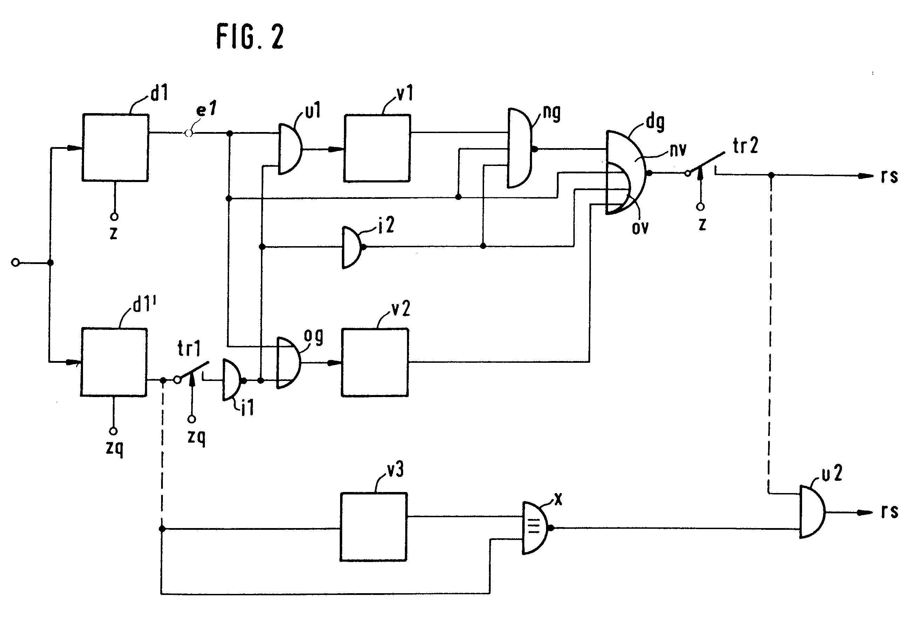

Ein Ausführungsbeispiel der Meßschaltung ms ist in Fig. 2 gezeigt, wobei der erste Datensynchronisierer d1 nach Fig. 1 nochmals gezeichnet ist. Ferner ist für die Fig. 2 vorausgesetzt, daß aus dem Taktsignal t innerhalb oder außerhalb des Chips ic zwei nichtüberlappende Zweiphasentakte z, zq gebildet sind, die als der Meßschaltung ms zugeführtes Taktsignal t dienen.

Der erste Datensynchronisierer d1 synchronisiert auf den ersten Zweiphasentakt z, was dadurch in Fig. 2 angedeutet ist, daß er eine Klemme für diesen Zweiphasentakt aufweist. Der Ausgang dieses Datensynchronisierers ist mit dem Eingang el der Meßschaltung verbunden. Es sei hier eingeschoben, daß bei Realisierung der Erfindung in der Technik integrierter Isolierschicht-Feldeffekttransistor-Schaltungen, also in MOS-Technik, als Datensynchronisierer beispielsweise die Anordnungen nach der DE-A 26 57 281 (= GB-B 15 57 508) eingesetzt werden können, die ein von einem der Zweiphasentakte getaktetes Transferelement aufweisen, über das das vom anderen Zweiphasentakt synchronisierte Signal zum Ausgang des Datensynchronisierers durchgeschaltet wird.

Die Meßschaltung ms nach Fig. 2 enthält den weiteren Datensynchronisierer d1′) , der auf den zweiten Zweiphasentakt zq synchronisiert und dem das davon getaktete erste Übertragungsglied tr1 nachgeschaltet ist; dieses ist der Einfachheit halber als Ein-Aus-Schalter gezeichnet, da dessen Realisierung je nach dem Aufbau des Chips ic durch unterschiedliche elektronische Mittel realisiert werden kann; in CMOS-Technik wird das Übertragungsglied tr1 z.B. ein Transmission-Gate sein.

Der jeweils erste Eingang des ersten UND-GATTERS u1 und des ODER-Gatters og liegt am Ausgang des ersten Datensynchronsierers d1 und deren jeweils zweiter Eingang am Ausgang des ersten Übertragungsglieds tr1. Diesen beiden Gattern ist der erste bzw. zweite Verzögerer v1, v2 nachgeschaltet, deren jeweilige Verzögerungszeit gleich der Periodendauer des Taktsignals t ist, das ihnen zuzuführen ist.

Der erste Eingang des NAND-Gatters ng liegt am Ausgang des ersten Verzögerers v1 und dessen zweiter Eingang am Ausgang des ersten Datensynchronisierers d1, während seinem dritten Eingang das mittels des zweiten Inverters i2 invertierte Ausgangssignal des ersten Inverters i1 zugeführt ist.

Dem NAND-Gatter ng ist das Doppelgatter dg nachgeschaltet. Es besteht aus der ODER-Verknüpfung ov und der NAND-Verknüpfung nv, deren einer Eingang das Ausgangssignal der ODER-Verknüpfung mit dem NAND-seitigen Eingang des Doppelgatters dg, der am Ausgang des NAND-Gatters ng liegt, NAND-verknüpft.

Die zeichnerische Darstellung mittels der üblichen Schaltsymbole für logische Gatter ist dabei so gewählt, daß durch den Punkt am Ausgang des Doppelgatters dg angedeutet ist, daß es nur einen Arbeitswiderstand aufweist, während die ODER-Verknüpfung eine solchen nicht hat. Aus diesem Grunde wird sprachlich auch zwischen einer Verknüpfung und einem Gatter unterschieden.

Je einer der drei Eingänge der ODER-Verknüpfung ov des Doppelgatters dg liegt am Ausgang des ersten Datensynchronisierers d1 bzw. am Ausgang des zweiten Verzögerers v2 bzw. am Ausgang des zweiten Inverters i2, so daß diesem Eingang das invertierte Ausgangssignal des ersten Inverters i1 zugeführt ist. Dem Ausgang des Doppelgatters dg ist das vom ersten Zweiphasensignal z getaktete zweite Übertragungsglied tr2 nachgeschaltet, dessen Ausgang zum Reset-Eingang rs des Frequenzteilers ft führt.

In Fig. 2 ist durch die beiden gestrichelt gezeichneten Verbindungsleitungen angedeutet, daß die bisher beschriebene Schaltung der Fig. 2 noch weitergebildet werden kann. Dazu ist das EXNOR-Gatter x, also ein Äquivalenzgatter, vorgesehen, dessen erster Eingang mit dem Ausgang des weiteren Datensynchronisierers d1′ verbunden ist und dessen zweiter Eingang über den dritten Verzögerer v3 am Ausgang des weiteren Datensynchronisierers d1′ liegt, wobei die Verzögerungszeit des Verzögerers v3 gleich der Periodendauer des Taktsignal t ist. Ferner ist bei dieser Weiterbildung zwischen den Ausgang des zweiten Übertragungsglieds tr2 und den Reset-Eingang rs die eine Eingangs-Ausgangs-Strecke des zweiten UND-Gatters u2 eingefügt, dessen anderer Eingang am Ausgang des EXNOR-Gatters x liegt. Somit wird der Reset-Eingang rs des Frequenzteilers ft bei dieser Weiterbildung vom Ausgang des zweiten UND-Gatters u2 angesteuert.

Mit dieser Weiterbildung läßt sich eine Fehlfunktion vermeiden, die dann auftritt, wenn die aktive Flanke der Datenwechsel so flach ist, daß die Datenübernahme zu einem falschen Zeitpunkt erfolgte.

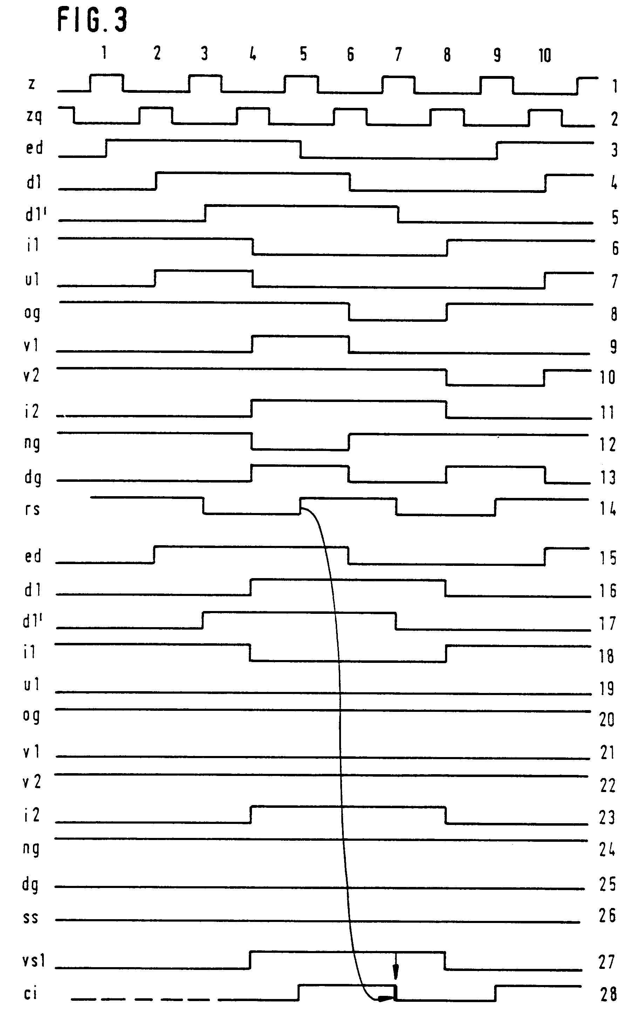

In Fig. 3 ist eine Schar von Signalverläufen gezeigt, die bei einer realisierten Ausführungsform der Erfindung nach Fig. 1 und 2 für den Fall n=2 auftreten, also für den Fall, daß die Frequenz des Taktsignals t doppelt so groß ist wie die Frequenz des Eingangsdatentakts. Zum Aufbau der Fig. 3 ist zunächst formal anzumerken, daß der zeitliche Ablauf der beiden Zweiphasentakte z, zq für deren zehn abwechselnd aufeinander folgende Impulse gezeigt ist, die durch die in der obersten Zeile der Fig. 3 angegebenen Zahlen 1 bis 10 fortlaufend numeriert sind. Der Zweiphasentakt z hat somit die ungeradzahligen Impulse Nr. 1, 3, 5, 7, 9, während der Zweiphasentakt zq die geradzahligen Impulse Nr. 2, 4, 6, 7, 10 enthält. Am linken Rand der Fig. 3 sind die Bezugszeichen derjenigen Signale bzw. Teilschaltungen eingetragen, an deren Ausgang die gezeigte Kurvenform auftritt. Am rechten Rand der Fig. 3 sind die einzelnen Kurven mit den Zahlen 1 bis 28 fortlaufend numeriert. Bei jeder Kurve bedeutet die Grundlinie, auf der das Bezugszeichen und die Numerierungszahl steht, den negativeren Pegel der beiden gezeigten Binärpegel, also den L-Pegel. Demzufolge ist der andere Pegel der H-Pegel. Somit haben die ungerade numerierten Impulse des Zweiphasentakts z und die gerade numerierten Impulse des Zweiphasentakts zq den H-Pegel.

Die Kurven Nr. 3 bis 14 und 15 bis 26 zeigen für zwei verschiedene zeitliche Lagen des Datenwechsels der Eingangsdaten ed die entsprechenden Signalverläufe von Fig. 2. Im Falle der Kurven Nr. 3 bis 14 erfolgt der Datenwechsel der Eingangsdaten ed (Kurve Nr. 3) während der Taktimpulse Nr. 1, 5 und 9 (es ist also auch ersichtlich, daß die Frequenz des Eingangsdatentakts gleich der Hälfte der Frequenz der Zweiphasentakte z, zq ist). Im Fall der Kurven Nr. 15 bis 26 erfolgt der Datenwechsel dagegen während der Taktimpulse Nr. 2, 6 und 10. Die Kurven Nr. 27 und 28 zeigen schließlich die zeitliche Lage der Datenübernahme.

In Kurve Nr. 3 erfolgt der Datenwechsel, wie bereits erwähnt, während des H-Pegels des Impulses Nr. 1; als Datenwechsel ist in Kurve Nr. 3 der Übergang von einem L- zu einem H-Pegel angenommen. Dieser Datenwechsel wird mittels des Datensynchronisierers d1 auf das Taktsignal z synchronisiert und erscheint demzufolge mit dem H-Pegel des Taktimpulses Nr. 2 an dessen Ausgang, dagegen erst mit dem H-Pegel des Taktimpulses Nr. 3 am Ausgang des Datensynchronisierers d1′, da dieser auf das Taktsignal zq synchronisiert und somit mit dem Taktimpuls Nr. 3 das synchronisierte Signal an dessen Ausgang gelangt, vgl. die Kurven Nr. 4 und 5.

Das Ausgangssignal des Datensynchronisierers d1′ tritt am Ausgang des Inverters i1 mit dem H-Pegel des Taktimpulses Nr. 4 invertiert, also als L-Pegel, auf, da das Übertragungsglied tr1 von diesem Taktimpuls leitend gesteuert wird.

Am Ausgang des UND-Gatters u1 tritt mit dem H-Pegel des Taktimpulses Nr. 2 der H-Pegel auf, da zu diesem Zeitpunkt sowohl am Ausgang des Datensynchronisierers d1 als auch an dem des Inverters i1 je ein H-Pegel vorhanden ist. Der H-Pegel am Ausgang des UND-Gatters u1 dauert bis zum Taktimpuls Nr. 4, da dann (siehe oben) der L-Pegel am Ausgang des Inverters i1 auftritt.

Am Ausgang des ODER-Gatters og wechselt erst mit dem Taktimpuls Nr. 6 der zuvor dort liegende H-Pegel in den L-Pegel, der mit dem Taktimpuls Nr. 8 wieder in den H-Pegel übergeht, da erst mit dem Taktimpuls Nr. 6 sowohl der Ausgang des Datensynchronisierers d1 als auch der Ausgang des Inverters i1 den L-Pegel annehmen bzw. haben.

Die Ausgangssignale am UND-Gatter u1 und ODER-Gatter og treten um die Taktperiode der Zweiphasentakte z, zq verzögert an den Ausgängen der Verzögerer v1, v2 auf, wie die Kurven Nr. 8 und 9 zeigen. Das Ausgangssignal am Inverter i2 nach Kurve Nr. 11 zeigt das invertierte Signal des Ausgangs des Inverters i1 und ist daher mit dem Signal am Ausgang des Übertragungsglieds tr1 identisch, da für die Erläuterung der Fig. 2 anhand der Fig. 3 die in praxi vorhandenen Verzögerungen in den einzelnen Schaltungsteilen unberücksichtigt bleiben.

Das Signal am Ausgang des NAND-Gatters ng wechselt mit dem Taktimpuls Nr. 4 vom H-Pegel in den L-Pegel, da erst mit diesem Taktimpuls jeder seiner drei Eingänge einen H-Pegel hat oder annimmt, wie die Kurven Nr. 4, 9 und 11 zeigen. Mit dem Taktimpuls Nr. 6 geht der L-Pegel am Ausgang des NAND-Gattes ng wieder in einen H-Pegel über, da dann nach Kurve Nr. 9 am Ausgng des Verzögerers v1 ebenfalls ein L-Pegel wieder auftritt.

Ebenfalls mit dem Taktimpuls Nr. 4 ändert sich der L-Pegel am Ausgang des Doppelgatters dg in den H-Pegel, der mit dem Taktimpuls Nr. 6 wieder in den L-Pegel und dieser mit dem Taktimpuls Nr. 8 wieder in den H-Pegel und dieser mit dem Taktimpuls Nr. 10 wieder in den L-Pegel übergeht, vgl. Kurve Nr. 13. Der L/H-Übergang zum Taktimpuls Nr. 4 ergibt sich aus den vier Eingangssignalen des Doppelgatters dg entsprechend den Kurven Nr. 4, 10, 11 und 12. Da die ODER-Verknüpfung ov zum Taktimpuls Nr. 4 wegen des H-Pegels der Kurve Nr. 4 ebenfalls einen H-Pegel liefert und das Ausgangssignal des NAND-Gatters ng bis zum Taktimpuls Nr. 4 einen H-Pegel führt, so daß bis dahin der Ausgang des Doppelgatters dg einen L-Pegel hat, mit dem Taktimpuls Nr. 4 aber der Ausgang des NAND-Gatters ng den L-Pegel annimmt, ergibt sich der erwähnte H-Pegel der Kurve Nr.13. Dieser geht wegen des L/H-Wechsels der Kurve 12 mit dem Taktimpuls 6 wieder in den L-Pegel über. Die oben erwähnten weiteren Pegelwechsel am Ausgang des Doppelgatters dg ergeben sich durch die Wechsel der vier Eingangssignale zu den angegebenen Zeitpunkten.

Das Ausgangssignal des Doppelgatters dg nach Kurve Nr. 13 wird nun mittels des Übertragungsglieds tr2 zum Reset-Eingang rs des 1/n-Frequenzteilers ft durchgeschaltet, was mittels des Zweiphasentakts z, also zu den ungeradzahligen Taktimpulsen, erfolgt. Während der geradzahligen Taktimpulse hat das Reset-Signal rs dagegen den L-Pegel.

Nach Kurve Nr. 15 erfolgt der Datenwechsel eine halbe Taktperiode später als nach Kurve Nr. 3, also zum Taktimpuls Nr. 2. Dieser Datenwechsel tritt nach Kurve Nr. 16 erst zum Taktimpuls Nr. 4 am Ausgang des Datensynchronisierers d1 auf, dagegen schon - wie in Kurve Nr. 5 - zum Taktimpuls Nr. 3 am Ausgang des Datensynchronisierers d1'. Somit ist auch das Ausgangssignal des Inverters i1 nach Kurve Nr. 18 mit dem nach Kurve Nr. 6 identisch.

Am Ausgang des UND-Gatters u1 liegt jedoch im Gegensatz zum Fall der Kurve Nr. 7 dauernd ein L-Pegel, vgl. Kurve Nr. 19, und am Ausgang des ODER-Gatters og im Gegensatz zum Fall der Kurve Nr. 8 dauernd ein H-Pegel, vgl. Kurve Nr. 20. Somit führt der Ausgang des Verzögerers v1 dauernd einen L-Pegel und der des Verzögerers v2 dauernd einen H-Pegel, vgl. Kurven Nr. 21 und 22.

Das Ausgangssignal des Inverters i2 nach Kurve Nr. 23 ist mit dem der Kurve Nr. 11 identisch. Das Ausgangssignal des NAND-Gatters ng ist ein dauernder H-Pegel, vgl. Kurve Nr. 24, während die Ausgangssignale des Doppelgatters dg nach Kurve Nr. 25 und das dem Reset-Eingang rs zuzuführende Signal nach Kurve Nr. 26 jeweils dauernd einen L-Pegel haben. Diese Pegel ergeben sich in der gleichen Weise, wie dies oben bei der Erläuterung der Kurven Nr. 3 bis 14 im einzelnen dargelegt wurde.

Die Kurve Nr. 27 zeigt das Ausgangssignal der Verzögerungsstufe vs1 im Fall der Kurven Nr. 3 bis 14. Schließlich zeigt die Kurve Nr. 28 das Ausgangssignal des 1/n-Frequenzteilers ft, für den im Spezialfall der Fig. 3 n=2 ist, der also ein Binärteiler ist. Durch die L/H-Flanke des Resetsignals rs der Kurve Nr. 14 wird der Binärteiler so zurückgesetzt, daß sein Ausgangssignal bezüglich der synchronisierten Eingangsdaten möglichst zentriert zwischen zwei aufeinanderfolgenden Datenwechselzeitpunkten liegt.

Der Binärteiler als Zähler der Zählkapazität 2 wird durch das Resetsignal rs also unabhängig von seinem gerade erreichten Zustand in den Anfangszustand versetzt, von wo aus er erneut zu zählen beginnt.

Der H-Pegel in Kurve Nr. 28 liegt somit weitab von den beiden Flanken der Kurve Nr. 27. Die Datenübernahme in die Stufe p erfolgt mit der dick gezeichneten H/L-Flanke der Kurve Nr. 28, was der vorausgehenden L/H-Flanke des Resetsignals der Kurve Nr. 14 entspricht, wie durch die beiden Pfeile angedeutet ist. Hat dagegen das Resetsignal rs den in Kurve Nr. 26 gezeigten Verlauf, also einen dauernden L-Pegel, so wird der Binärteiler nicht zurückgesetzt.

Die Anordnung weist auch eine Hysterese auf, denn in Fig. 3 wird der Binärteiler erst das nächste Mal wieder zurückgesetzt, wenn sich die Datenwechselzeitpunkte so weit verschoben haben, daß sie zum Taktimpuls Nr. 3 auftreten.

## Patentansprüche

1. Digitaler Chip mit Eingangsdaten-Synchronisierung und mit einem Eingangsbus (eb) mit m Datenleitungen für mit einem Eingangsdatentakt (ce) getaktete Eingangsdaten (de), die innerhalb des Chips mit einem ihm zugeführten Taktsignal (t), dessen Frequenz (fi) ein ganzzahliges Vielfaches (n) der Frequenz (fe) des Eingangsdatentaktes (ce) ist, zu synchronisieren sind, sowie einem rücksetzbaren 1/n-Frequenzteiler (ft) für das Taktsignal (t) und einer Meßschaltung (ms) zur Phasenbestimmung,
dadurch gekennzeichnet,
- daß m Datensynchronisierern (d1..dm), von denen jeweils einer einer Datenleitung des Eingangsbus (eb) zugeordnet ist, das Taktsignal (t) als synchronisierendes Signal zugeführt wird,
- daß der Meßschaltung (ms) das Ausgangssignal des ersten Datensynchronisierers (d1) und das Taktsignal (t) zugeführt werden,
- daß das einem Reset-Eingang (rs) des 1/n-Frequenzteilers (ft) zugeführte Ausgangssignal der Meßschaltung (ms) bewirkt, daß die Impulse von dessen Ausgangssignal (ci), deren Impuls-Pausen-Verhältnis 1: (n-1) ist, zentriert zwischen zwei aufeinanderfolgenden Datenwechselzeitpunkten der synchronisierten Eingangsdaten liegen, und
- daß jedem Datensynchronisierer (d1...dm) eine Verzögerungsstufe (vs1...vsm) nachgeschaltet ist, die vom Taktsignal (t) getaktet wird und deren Verzögerungszeit mindestens gleich der von der Meßschaltung (ms) für einen einzelnen Phasenvergleich benötigten Zeit ist, und
- daß jeder Verzögerungsstufe (vs1...vsm) ein Transferschalter (t1...tm) nachgeschaltet ist, dessen Steuereingang das Ausgangssignal (ci) des 1/n-Frequenzteilers (ft) zugeführt ist.

2. Digitaler Chip nach Anspruch 1, bei dem der Meßschaltung (ms) ein Taktsignal (t) bestehend aus zwei nicht überlappenden Zweiphasentakten (z, zq) zugeführt wird und der einem ersten Eingang (e1) der Meßschaltung (ms) vorgeschaltete Datensynchronisierer (d1) auf den ersten Zweiphasentakt (z) synchronisiert, mit einer Meßschaltung (ms), die durch folgende Merkmale gekennzeichnet ist:
- der Eingang eines weiteren Datensynchronisierers (d1') ist mit dem Eingang des ersten Datensynchronisierers (d1) verbunden,
- dem weiteren Datensynchronisierer (d1'), der auf den zweiten Zweiphasentakt (zq) synchronisiert,ist ein von diesem Zweiphasentakt (zq) getaktetes erstes Übertragungsglied (tr1) nachgeschaltet, auf das ein erster Inverter (i1) folgt,
- der jeweils erste Eingang eines ersten UND- und eines ODER-Gatters (u1, og) liegt am ersten Eingang (e1) der Meßschaltung (ms) und deren jeweils zweiter Eingang am Ausgang des ersten Inverters (i1),
- dem ersten UND-Gatter (u1) und dem ODER-Gatter (og) ist ein erster bzw. ein zweiter Verzögerer (v1, v2) nachgeschaltet, deren jeweilige Verzögerungszeit gleich der Periodendauer des Taktsignals (t) ist,
- der erste Eingang eines NAND-Gatters (ng) liegt am Ausgang des ersten Verzögerers (v1) sowie dessen zweiter Eingang am ersten Eingang (e1) der Meßschaltung (ms) und dessen drittem Eingang ist das invertierte Ausgangssignal des ersten Inverters (i1) zugeführt,
- der NAND-seitige Eingang eines Doppelgatters (dg), das den Ausgang einer ODER-Verknüpfung (ov) NAND- verknüpft, liegt am Ausgang des NAND-Gatters (ng), während der erste Eingang der ODER-Verknüpfung (ov) mit dem ersten Eingang (e1) der Meßschaltung (ms) verbunden ist sowie dessen zweiter Eingang am Ausgang des zweiten Verzögerers (v2) liegt und dessen drittem Eingang das invertierte Ausgangssignal des ersten Inverters (i1) zugeführt ist, und
- der Ausgang des Doppelgatters (dg) führt über ein vom ersten Zweiphasentakt (z) getaktetes zweites Übertragungsglied (tr2) zu einem Ausgang der Meßschaltung, der mit dem Reset-Eingang (rs) des Frequenzteilers (ft) verbunden ist.

3. Digitaler Chip nach Anspruch 2 mit einer Meßschaltung (ms), gekennzeichnet durch folgende zusätzliche Merkmale:
- dem ersten Eingang eines EXNOR-Gatters (x) ist das Ausgangssignal des weiteren Datensynchronisieres (d1') direkt und seinem zweiten Eingang über einen dritten Verzögerer (v3) zugeführt, dessen Verzögerungszeit gleich der Periodendauer des Taktsignals (t) ist und
- zwischen dem Ausgang des zweiten Übertragungsgliedes (tr2) und dem Ausgang der Meßschaltung (ms), der zum Reset-Eingang (rs) des Frequenzteilers (ft) führt, ist eine Eingangs-Ausgangsstrecke eines zweiten UND-Gatters (u2) eingefügt, dessen anderer Eingang am Ausgang des EXNOR-Gatters (x) liegt.

4. Digitaler Chip nach einem der Ansprüche 1 bis 3, dadurch gekennzeichnet, daß er in CMOS-Technik realisiert ist.

## Claims

1. A digital chip with input-data synchronization, comprising an input bus (eb) containing m data lines for input data (de) which are clocked with an input-data clock (ce) and, within the chip, have to be synchronized with a clock signal (t) applied to the chip and having a frequency (fi) equal to an integral multiple (n) of the frequency (fe) of the input-data clock (ce), as well as a resettable 1/n frequency divider (ft) for the clock signal (t) and a measuring circuit (ms) for phase determination,
characterized in
- that the clock signal (t) is applied as a synchronizing signal to m data synchronizers (d1...dm) each associated with one of the data lines of the input bus (eb),
- that the measuring circuit (ms) is supplied with the output of the first data synchronizer (d1) and the clock signal (t),
- that the output of the measuring circuit (ms), which is applied to a reset input (rs) of the 1/n frequency divider (ft), causes the pulses of the output (ci) of the 1/n frequency divider (ft), whose mark/space ratio is 1 : (n-1), to be located centrally between two successive changes of state of the synchronized input data, and
- that each of the data synchronizers (d1...dm) is followed by a delay stage (vs1...vsm) which is clocked by the clock signal (t) and produces a delay at least equal to the time required by the measuring circuit (ms) for a single phase comparison, and
- that each of the delay stages (vs1...vsm) is followed by a transfer switch (t1...tm) whose control input is supplied with the output (ci) of the 1/n frequency divider (ft).

2. A digital chip as claimed in claim 1 wherein the measuring circuit (ms) is supplied with a clock signal (t) consisting of two nonoverlapping two-phase clocks (z, zq), and wherein the data synchronizer (d1), which is connected ahead of a first input (e1) of the measuring circuit (ms), synchronizes with the first two-phase clock (z), said digital chip comprising a measuring circuit (ms) characterized by the following features:
- The input of an additional data synchronizer (d1') is connected to the input of the first data synchronizer (d1);
- the additional data synchronizer (d1'), which synchronizes with the second two-phase clock (zq), is followed by a first transfer element (tr1) which is clocked by said two-phase clock (zq) and is followed by a first inverter (i1);
- the respective first inputs of a first AND gate (u1) and an OR gate (og) are connected to the first input (e1) of the measuring circuit (ms), and the respective second inputs of said gates are connected to the output of the first inverter (i1);
- the first AND gate (u1) and the OR gate (og) are followed by a first delay element (v1) and a second delay element (v2), respectively, which each provide a delay equal to the period of the clock signal (t);
- the first and second inputs of a NAND gate (ng) are connected to the output of the first delay element (v1) and to the first input (e1) of the measuring circuit (ms), respectively, and the third input of said NAND gate (ng) is supplied with the inverted output of the first inverter (i1);
- the NAND-side input of a two-element gate (tg) which NANDs the output of an OR element (ov) is connected to the output of the NAND gate (ng) while the first and second inputs of the OR element (ov) are connected to the first input (e1) of the measuring circuit (ms) and to the output of the second delay element (v2), respectively, and the third input is supplied with the inverted output of the first inverter (i1), and
- the output of the two-element gate (dg) is coupled through a second transfer element (tr2) to an output of the measuring circuit connected to the reset input (rs) of the frequency divider (ft), said second transfer element (tr2) being clocked by the first two-phase clock (z).

3. A digital chip as claimed in claim 2, comprising a measuring circuit (ms) characterized by the following additional features:
- The output of the additional data synchronizer (d1') is applied to the first input of an EXNOR gate (x) direct and to the second input of said EXNOR gate (x) through a third delay element (v3) which provides a delay equal to the period of the clock signal (t), and
- between the output of the second transfer element (tr2) and the output of the measuring circuit (ms), which is coupled to the reset input (rs) of the frequency divider (ft), an input-output path of a second AND gate (u2) is inserted, and the other input of said second AND gate (u2) is connected to the output of the EXNOR gate (x).

4. A digital chip as claimed in any one of claims 1 to 3, characterized by being implemented in CMOS technology.

## Revendications

1. Microplaquette numérique à synchronisation des données d'entrée, comportant un bus d'entrée (eb) comportant m lignes de transmission de données pour des données d'entrée (de), transmises de façon cadencée avec une cadence de données d'entrée (ce) et qui doivent être synchronisées à l'intérieur de la microplaquette avec un signal de cadence (t), qui lui est envoyé et dont la fréquence (fi) est un multiple entier (n) de la fréquence (fe) de la cadence (ce) des données d'entrée, ainsi qu'un diviseur de fréquence 1/n (ft) pouvant être ramené à l'état initial, pour le signal de cadence (t), et un circuit de mesure (ms) pour la détermination de la phase,
caractérisée en ce
- que le signal de cadence (t) est envoyé en tant que signal de synchronisation à m synchroniseurs de données (d1...dm), dont l'un respectif est associé à une ligne de transmission de données du bus d'entrée (eb),
- que le signal de sortie du premier synchroniseur de données (d) et le signal de cadence (t) sont envoyés au circuit de mesure (ms),
- que le signal de sortie du circuit de mesure (ms), qui est envoyé à l'entrée de remise à l'état initial (rs) du diviseur de fréquence 1/n (fe), agit de telle sorte que les impulsions de son signal de sortie (ci) **dont le** rapport impulsion/pause est égal à 1:(n-1), sont centrées entre deux instants successifs de commutation des données d'entrée synchronisées, et
- qu'en aval de chaque synchroniseur de données (d1...dm) est branché un étage de retardement (vs1...vsm), qui est commandé de façon cadencée par le signal de cadence (t) et qui produit un retard égal au moins à la durée nécessaire au circuit de mesure (ms) pour une comparaison individuelle de phase, et
- qu'en aval de chaque étage de retardement (vs1...vsm) est branché un interrupteur de transfert (t1...tm), à l'entrée de commande duquel est envoyé le signal de sortie (ci) du diviseur de fréquence 1/n (ft).

2. Microplaquette numérique selon la revendication 1, dans laquelle un signal de cadence (t) constitué par deux cadences biphasées (z, zq), qui ne se chevauchent pas, est envoyé au circuit de mesure (ms) et que le synchroniseur de données (d1) branché en amont d'une première entrée (e1) du circuit de mesure (ms) est synchronisé sur la première cadence biphasée (z), et comportant un circuit de mesure (ms) qui est caractérisé par les caractéristiques suivantes :
- l'entrée d'un autre synchroniseur de données (d1') est raccordée à l'entrée du premier synchroniseur de données (d1),
- en aval de l'autre synchroniseur de données (d1'), qui est synchronisé sur la seconde cadence biphasée (zq), est branché un premier circuit de transmission (tr1), qui est commandé de façon cadencée par cette seconde cadence biphasée (zq), et en aval duquel est branché un premier inverseur (i1),
- la première entrée respective d'une première porte ET et d'une porte OU (u1, og) est raccordée à la première entrée (e1) du circuit de mesure (ms) et la seconde entrée respective de ces portes est raccordée à la sortie du premier inverseur (i1),
- en aval de la première porte ET (u1) et de la porte OU (og) sont raccordés des premier et second circuits de retardement (v1,v2), qui produisent des retards respectifs égaux à la durée de la période du signal de cadence (t),
- la première entrée d'une porte NON-ET (ng) est raccordée à la sortie du premier circuit de retardement (v1), et la seconde entrée de cette porte est raccordée à la première entrée (e1) du circuit de mesure (ms), tandis qu'à la troisième entrée de cette porte est appliqué le signal de sortie inversé du premier inverseur (i),
- l'entrée, située du côté de la porte NON-ET, d'une porte double (dg), qui applique une combinaison NON-ET au signal de sortie d'un premier circuit combinatoire OU (ov), est raccordée à la sortie de la porte NON-ET (ng), tandis que la première entrée du circuit combinatoire OU (ov) est raccordée à la première entrée (e1) du circuit de mesure (ms) et que la seconde entrée de ce circuit combinatoire est raccordée à la sortie du second circuit de retardement (v2), tandis qu'à la troisième entrée de ce circuit combinatoire est envoyé le signal de sortie inversé du premier inverseur(i1), et
- la sortie de la porte double (dg) est connectée, par l'intermédiaire d'un second circuit de transmission (tr2), commandé de façon cadencée par la première cadence biphasée (z), à une sortie du circuit de mesure, qui est reliée à l'entrée de remise à l'état initial (rs) du diviseur de fréquence (ft).

3. Microplaquette numérique selon la revendication 2, comportant un circuit de mesure (ms), caractérisé par les caractéristiques supplémentaires suivantes :
- le signal de sortie de l'autre synchroniseur de données (d1') est envoyé directement à la première entrée d'une porte NON-OU-EXCLUSIF (x) et est envoyé à la seconde entrée de cette porte par l'intermédiaire d'un troisième circuit de retardement (v3), qui produit un retard égal à la durée de la période du signal de cadence (t), et
- entre la sortie du second circuit de transmission (tr2) et la sortie du circuit de mesure (ms), qui aboutit à l'entrée de remise à l'état initial (rs) du diviseur de fréquence (ft), est insérée une section d'entrée-sortie d'une seconde porte ET (u2), dont l'autre entrée est raccordée à la sortie de la porte NON-OU-EXCLUSIF (x).

4. Microplaquette numérique selon l'une des revendications 1 à 3, caractérisée en ce qu'elle est réalisée selon la technique CMOS.
